# EUROPEAN PATENT SPECIFICATION

(11) **EP 2 252 391 B1**
(45) Date of publication and mention of the grant of the patent: **22.05.2013**
(21) Application number: 09707430.6
(22) Date of filing: 06.02.2009
(51) Int. Cl.: B01F 5/00, B01F 3/08, B01J 19/00, B01J 19/24

(54) **VORTEX MIXER AND METHOD OF OBTAINING A SUPERSATURATED SOLUTION OR SLURRY**
VORTEXMISCHER UND VERFAHREN ZUM ERHALT EINER ÜBERSÄTTIGTEN LÖSUNG ODER AUFSCHLÄMMUNG
MÉLANGEUR À TOURBILLON, ET PROCÉDÉ D'OBTENTION D'UNE SOLUTION OU D'UNE BOUILLIE SURSATURÉE

(30) Priority: 08.02.2008 EP 08101405
(43) Date of publication of application: 24.11.2010
(73) Proprietor: PURAC Biochem BV, 4206 AC Gorinchem (NL)
(72) Inventor: VORAGE, Marcus Johannes Anthonius Wilhelmus, NL-9458 TC Balloo (NL); RADENOVIC-PELLETIER, Neda, NL-UTRECHT 3562 Vh (NL); VISSER, Jildert Eelke, NL-9405 PD Assen (NL); GARZON LOPEZ, Paola Soraya, NL-3311 KE Dordrecht (NL)
(74) Representative: Aalbers, Arnt Reinier
(86) International application number: PCT/EP2009/051348
(87) International publication number: WO 2009/098274

(56) References cited:
- EP-A- 0 307 821
- WO-A-2004/052496
- GB-A- 2 130 908
- JP-A- 60 161 721
- US-A- 2 890 929
- US-A- 4 734 109
- US-B1- 6 207 064
- US-B1- 6 467 947

## Description

The invention relates to a vortex mixer comprising a mixing chamber having an axial outlet and at least one inlet which is at least substantially tangential, i.e. which extends in a direction of which the tangential component is larger than the radial and axial components. The invention also relates to a method of obtaining a supersaturated solution or slurry of a reaction product wherein at least first and second reactants are introduced into said vortex mixer.

EP 646 407 A1 discloses a vortex mixer which includes a cylindrical mixing chamber having an axial outlet and a plurality of inlets so arranged that a vortex is set up in the mixing chamber when fluid is admitted to the mixing chamber via the inlets. The arrangement may be such that two or more liquid reagents can be admitted to the chamber, or a single reagent or additive can be added to a main liquid flowing through the mixer.

The liquid leaving the vortex mixer does so in the form of a vortex. As a result, there is a degree of reverse flow along the inside of the vortex. This reverse flow can extend for a distance equal to several tens of the diameter of the exit pipe from the mixing chamber. EP 646 407 relates to "the operation of" and means (denoted in the drawings by numeral 5) for minimising reverse flow in mixed fluids issuing from the vortex mixer.

WO 02/04125 A2 discloses a system and method for comminution, blending and processing of particles of a material and an additive using a high pressure fluid energy mill. The mill outputs a slurry comprised of particles of the material, the additive and the energy transfer fluid. The slurry is introduced into a hydrocyclone for separating particles by size. The slurry is introduced into a spray dryer. The spray dryer atomizes the slurry, which falls through a heat zone, vaporizing the fluid. A collector catches the dry falling particles.

US 2005/0155541 A1 discloses how small crystals are made by mixing a solution of a desired substance with an anti-solvent in a fluidic vortex mixer in which the residence time is less than 1 s, for example 10 ms. The liquid within the fluidic vortex mixer (12) is subjected to high intensity ultrasound from a transducer (20, 22). The solution very rapidly becomes supersaturated, and the ultrasound can induce a very large number of nuclei for crystal growth. Small crystals, for example less than 5 µm, are formed. The resulting suspension is treated so as to add or remove ingredients, and then spray dried using an atomiser tuned to create small droplets in such a way that each droplet should contain not more than one crystal.

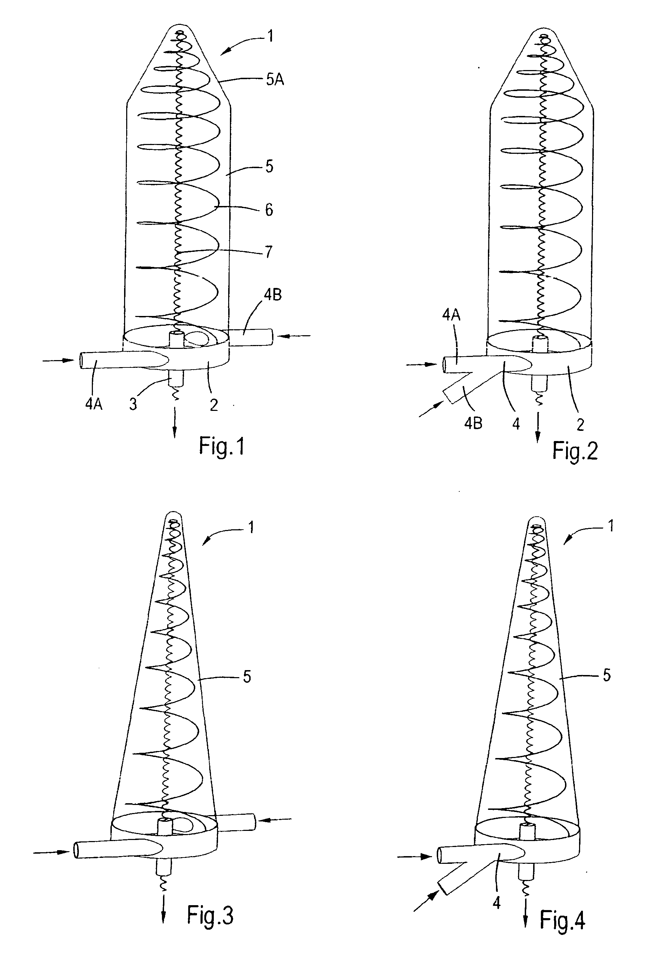

US 4,734,109 A1 discloses an effluent treatment apparatus adapted for conditioning an effluent stream within a treatment zone. The apparatus is comprised of an injection system which includes at least one injection nozzle having a flexible discharge tube with an effective length at least equal to the characteristic wavelength for flexural resonant vibration thereof when pressurized fluid issues therefrom. The apparatus shown in Figures 1 and 2 is "based generally upon a conventional cyclone configuration". The air treatment apparatus according to US 4,734,109 "extends the range of efficient separation, permitting the classification of micron or sub-micron size particles from-effluent conducted through the zone 16". I.e., this apparatus is a separator, not a mixer. Further reference is also made to US 6207064 B1.

It is an object of the present invention to provide an improved vortex mixer.

To this end, the vortex mixer according to the present invention is characterized by a closed residence chamber extending axially on the side of the mixing chamber opposite from the axial outlet. It is preferred that the residence chamber is dimensioned to generate, during operation, an outer vortex in a direction away from the outlet and an inner vortex in a direction towards the outlet.

With a closed chamber, all liquids introduced in the mixer leave the mixer on the same side, typically via a single outlet.

It was found that the double vortex sustains intensive mixing of the components and thus enables prolonged mixing. In case of e.g. reactants yielding a supersaturated solution and/or slurry, prolonged intensive mixing in turn enables reactants to react more completely and/or results in an increased number of seed crystals.

It is preferred that the internal length (L) of the residence chamber is in a range from 10 cm to 2 m, preferably in a range from 15 cm to 1 m, more preferably in a range of 20 cm to 70 cm, the inner diameter (D) of the residence chamber is in a range from 1 cm to 20 cm, preferably in a range from 2 cm to 10 cm, and/or the aspect ratio (L/D) is in a range from 0,5 to 50, preferably in a range of 3 to 15.

If, in addition to adjustable flow rates of the components fed to the mixer, the length of the residence chamber is adjustable and/or the mixer is part of a kit comprising at least two interchangeable residence chambers of different lengths, shear in and residence time of the mixture can be selected independently.

The invention also relates to a method of obtaining a supersaturated solution of a reaction product, wherein at least a first liquid stream containing a first reactant and a second liquid stream containing a second reactant are introduced into the above vortex mixer, generating an outer vortex in a direction away from the outlet of the mixer and an inner vortex in a direction towards the outlet, and wherein the reactants react to form the supersaturated solution.

It is preferred that the first stream is a solution of an organic acid, e.g. selected from lactic acid, gluconic acid, and citric acid, and/or the second stream is a suspension of a base, e.g. selected from magnesium (hydr)oxide (which stands for magnesium oxide or magnesium hydroxide), calcium (hydr)oxide, zinc (hydr)oxide, and aluminium (hydr)oxide. Examples of products are lactate salts, gluconate salts, and cilrate salls of, e.g., magnesium, calcium, zinc and aluminium. Salts, e.g. Mg, Ca, Zn, and Al salts, of other organic or inorganic acids can also be obtained.

The method according to the present invention facilitates the depletion of the reactants and the production of relatively small crystals, e.g. having a mean size in a range from 1 to 100 µm, preferably in a range from 1 to 20 µm, and/or of crystals containing less or no inclusions of one of the reactants.

It is preferred that the pressure in the mixer is at least 0,3 bar (above atmospheric pressure), preferably at least 0,5 bar. Thus, the time required for the crystals to reach a desired particle size distribution, typically by collecting the supersaturated solution in a stirred vessel or crystallizer, is reduced significantly. Of course, the pressure is limited by the mechanical strength of the mixer used, e.g. to 5 or 10 bar.

It was found that at the outlet of the vortex mixer highly supersaturated solutions with very high dry solids content, e.g. more than 25 wt% or more than 30 wt% and e.g. up to 80 wt% or up to 50 wt%, can be produced when still at low viscosity. A benefit of the vortex mixer in this case is that mixing takes place before a slurry containing large amounts of small crystals is formed. These slurries containing large amounts of small crystals are well known for their high viscosities at high dry solids concentrations. Mixing of liquids at low viscosity is much faster and less energy consuming than mixing of high viscosity liquids or slurries. Thus, by using the vortex mixer, it is possible to produce slurries with very high dry solids concentrations which will be difficult if not impossible to obtain in a stirred tank reactor configuration.

Products obtained with the present invention were found to be very suitable for various applications such as cosmetic and personal care applications, dental or oral care applications and technical applications.

Also, the products obtained with the present invention, in particular magnesium lactate, zinc lactate, and calcium citrate, can be used in various food products, including vitamin and mineral supplements and beverages, and are suitable to make tablets of. This creates further new applications in which before no metal lactate or citrate powder could be used.

The invention will now be explained in more detail with reference to the figures, which show several embodiments of a vortex mixer according to the present invention.
Figures 1 and 2 are perspective views of a first and second embodiment of a vortex mixer according to the present invention comprising a cylindrical residence chamber.
Figures 3 and 4 are perspective views of a third and fourth embodiment of a vortex mixer according to the present invention comprising a conical residence chamber.

The drawings are not necessarily to scale and details, which are not necessary for understanding the present invention, may have been omitted. Further, elements that are at least substantially identical or that perform an at least substantially identical function are denoted by the same numeral. Furthermore, terms as "downwards", "up, "horizontal", and the like relate to the orientation of elements as shown in the drawings.

Figure 1 shows a first embodiment of a vortex mixer 1 according to the present invention comprising a mixing chamber 2 having an axial outlet 3 directed downwards and two horizontal inlets 4A, 4B extending tangentially with respect to the circumference of the mixing chamber 2. In this example, the mixing chamber 2 has an internal height of 20 num and a diameter of 35 mm. The inlets 4A, 4B are located at 180° from each other.

A closed residence chamber 5 is detachably connected to the mixing chamber 2, e.g. by means of flanges, a clamp or a threaded coupling (not shown), and extends axially on the side of the mixing chamber 2 opposite from the axial outlet 3 and beyond the inlets 4 and the mixing chamber 2. In general, it is preferred that the outlet 3 comprises a pipe that extends axially through the mixing chamber 2 and ends at or near the transition between the mixing chamber 2 and the residence chamber 5 or inside the residence chamber 5, thus avoiding a short-cut of reactants from the inlets 4A, 4B to the outlet 3.

The residence chamber 5 comprises a cylindrical main portion and a conical top portion 5A. In this example, the residence chamber 5 has an inner diameter (D) of 35 mm and an internal length of 25 cm.

The parts (2, 5) described above are made of a material that provides sufficient strength to withstand internal pressures in excess of 1 bar, e.g. 5 or 10 bar, and that provides smooth internal surfaces so as to reduce or avoid disturbance of internal flow and the formation of encrustations. Suitable materials include, e.g., stainless steel, engineering polymers such as polyetheresterketone (PEEK), glass, and glass lined steel. For the same reasons, it is preferred that, at the interface between the mixing chamber and the residence chamber, the cross-sections of the chambers are at least substantially identical and in register.

During operation, a first liquid stream of a solvent containing a first reactant, e.g. lactic acid solved in water, and a second liquid stream containing a second reactant, e.g. a suspension of magnesium (hydr)oxide in water, were fed to the vortex mixer, e.g. by means of a high pressure pump at 1,5 bar, at a temperature of 60 °C, and at flow rates of 0,5 and 1 m³/h, respectively. A double vortex was generated, viz. an outer vortex 6 rising up the residence chamber 5 and an inner vortex 7 forced down the chamber 5 and towards the outlet 3.

A double vortex sustains intensive mixing during prolonged residence times, in this example 0,5 seconds, which, on the one hand, was sufficiently long to substantially deplete all reactants and form seed crystals and, on the other hand, was sufficiently short to prevent crystal growth within the mixer. In this example, the supersaturated solution was collected in a stirred vessel eventually yielding a slurry containing crystals having a mean size of 15 µm and a narrow size distribution and containing essentially no reactant.

The presence of reactant in the slurry or attached to the crystals may be an indication that the residence time was too short. In that case, the residence chamber can be replaced by a longer but otherwise identical residence chamber. Conversely, the presence of larger crystals or a broader size distribution may be an indication that crystal growth already commenced in the mixer. In that case, the residence chamber can be replaced by a shorter but otherwise identical residence chamber. In the method according to the invention, residence times are typically in a range from 0,1 to 2 s, more specifically in a range from 0,2 to 1 s.

In a further example, again using a vortex mixer with a diameter of 35 mm, a first liquid stream of citric acid dissolved in water at 70 wt% and a second liquid stream of a suspension of calciumhydroxide in water ('milk of lime') at 28 wt%, were fed to the vortex mixer by means of dosing pumps at 1 bar (mea a temperature of 60 °C, and flow rates of 0,310 and 0,900 m³/hr respectively. Mixing during a residence time of 0,5 seconds inside the vortex was sufficient to substantially deplete all reactants and form seed crystals. At the outset of the vortex mixer, a temperature of approximately 89 °C was measured indicating that (exothermic) neutralization was complete.

The supersaturated solution leaving the vortex mixer was collected in a stirred vessel and allowed to form a slurry in a slightly acidic environment (pH= 4,3). During the next 4 hours, the viscosity increased to 10 Pa.s and a slurry was formed containing calciumcitrate.4.aq crystals with a mean particle size of 7,7 µm. This slurry was suitable for spray-drying.

In a comparative example, performed under similar conditions but at a pressure of 0,2 bar, a similar mean particle size was obtained after no less than 20 hours.

By using a longer residence chamber and/or a higher pressure, a slurry having a mean particle size suitable for spray-drying can be obtained already during mixing, i.e. inside the vortex mixer. In such configurations and/or under such conditions, respectively, the vortex mixer could be connected directly to a spray dryer or at least in a continuous process.

The inlets of the vortex mixer may have different cross-sections, e.g. the aspect ratio of an inlet for a liquid having a relatively high viscosity can be selected higher so as to introduce the liquid into mixer in the form of a relatively thin layer or film.

Instead of two separate inlets, the inlets 4A, 4B can be joined to form a common inlet 4 of the mixing chamber 2, as shown in Figure 2. Further alternatives include, but are not limited to, mixing chambers comprising three or more inlets, e.g. three inlets spaced at 120° along the mixing chamber, and/or inlets extending in a direction having a radial component.

The conical top portion 5A reinforces formation of a second vortex. Figure 3 shows a vortex mixer 1 similar to the one shown in Figure 1, but having a residence chamber 5 which is conical over its entire length. Increasing the (relative) length of the conical portion results in a more gradual acceleration of liquid in the outer vortex. Figure 4 shows a vortex mixer 1 having a common inlet 4 and a residence chamber 5 which is conical over its entire length.

The vortex mixer can also be employed to thoroughly mix non-reactants, e.g., cold and hot water to obtain lukewarm warm water of a selected temperature or oil(s) and water to prepare emulsions for, e.g., pharmaceutical of cosmetic purposes.

## Claims

1. Vortex mixer (1) comprising a mixing chamber (2) having an axial outlet (3) and at least one inlet (4) which is at least substantially tangential, **characterized by** a closed residence chamber (5) extending axially on the side of the mixing chamber (2) opposite from the axial outlet (3).

2. Vortex mixer (1) according to claim 1, wherein
the residence chamber (5) is dimensioned to generate, during operation, an outer vortex (6) in a direction away from the outlet (3) and an inner vortex (7) in a direction towards the outlet (3)

3. Vortex mixer (1) according to claim 1 or 2,
wherein at least the end portion (5A) of the residence chamber (5) is conical.

4. Vortex mixer (1) according to any one of the preceding claims, wherein the internal length (L) of the residence chamber (5) is in a range from 10 cm to 2 m, preferably in a range from 15 cm to 1 m, more preferably in a range of 20 cm to 70 cm, the inner diameter (D) of the residence chamber is in a range from 1 cm to 20 cm,
preferably in a range from 2 cm to 10 cm, and/or the aspect ratio (L/D) is in a range from 0,5 to 50, preferably in a range of 3 to 15.

5. Vortex mixer (1) according to any one of the preceding claims, wherein at the interface between the mixing chamber (2) and the residence chamber (5) the cross-sections of the chambers (2, 5) are at least substantially identical and in register.

6. Vortex mixer (1) according to any one of the preceding claims, wherein the length of the residence chamber (5) is adjustable and/or wherein the mixer (1) is part of a kit comprising at least two interchangeable residence chambers (5) of different lengths.

7. Vortex mixer (1) according to any one of the preceding claims, wherein the outlet (3) comprises a pipe that extends through the mixing chamber (2) and ends at or near the transition between the mixing chamber (2) and the residence chamber (5) or inside the residence chamber (5).

8. Method of obtaining a supersaturated solution or slurry of a reaction product, wherein at least a first liquid stream containing a first reactant and a second liquid stream containing a second reactant are introduced into a vortex mixer (1) comprising a mixing chamber (2) having an axial outlet (3), at least one inlet (4) which is at least substantially tangential, and a residence chamber (5) extending axially on the side of the mixing chamber (2) opposite from the axial outlet (3), generating an outer vortex (6) in a direction away from the outlet (3) of the mixer (1) and an inner vortex (7) in a direction towards the outlet (3), and wherein the reactants react to form the supersaturated solution.

9. Method according to claim 8, wherein the first stream is a solution of an organic acid, e.g. selected from lactic acid, gluconic acid, and citric acid, and/or the second stream is a suspension of a base, e.g. selected from magnesium (hydr)oxide, calcium (hydr)oxide, zinc (hydr)oxide, and aluminium (hydr)oxide.

10. Method according to claim 9, wherein the pressure in the mixer is at least 0,3 bar, preferably in a range from 0,5 bar to 10 bar.

11. Method according to any one of claims 8-10,
wherein the supersaturated solution has a dry solids content of more than 25 wt%, preferably more than 30 wt%, preferably in a range from 30 to 80 wt%, preferably in a range from 30 to 50 wt%.

## Patentansprüche

1. Vortex-Mischer (1), aufweisend eine Mischkammer (2), welche einen axialen Auslass (3) und zumindest einen Einlass (4) hat, welcher zumindest im Wesentlichen tangential ist, **gekennzeichnet durch** eine geschlossene Aufenthaltskammer (5), welche sich an der Seite von der Mischkammer (2), welche dem axialen Auslass (3) gegenüber liegt, axial erstreckt.

2. Vortex-Mischer (1) gemäß Anspruch 1, wobei die Aufenthaltskammer (5) dimensioniert ist, um während des Betriebs einen äußeren Vortex/Wirbel (6) in einer Richtung weg von dem Auslass (3) sowie einen inneren Vortex/Wirbel (7) in einer Richtung zu dem Auslass (3) zu erzeugen.

3. Vortex-Mischer (1) gemäß Anspruch 1 oder 2, wobei zumindest der Endabschnitt (5A) der Aufenthaltskammer (5) konisch ist.

4. Vortex-Mischer (1) gemäß einem der vorangehenden Ansprüche, wobei die innere Länge (L) der Aufenthaltskammer (5) in einem Bereich von 10 cm bis 2 m ist, vorzugsweise in einem Bereich von 15 cm bis 1 m, noch bevorzugter in einem Bereich von 20 cm bis 70 cm, der innere Durchmesser (D) der Aufenthaltskammer in einem Bereich von 1 cm bis 20 cm ist, vorzugsweise in einem Bereich von 2 cm bis 10 cm, und/oder das Aspektverhältnis (L/D) in einem Bereich von 0,5 bis 50 ist, bevorzugt in einem Bereich von 3 bis 15.

5. Vortex-Mischer (1) gemäß einem der vorangehenden Ansprüche, wobei an der Grenzfläche zwischen der Mischkammer (2) und der Aufenthaltskammer (5) die Querschnitte der Kammern (2, 5) zumindest im Wesentlichen identisch und im Register sind.

6. Vortex-Mischer (1) gemäß einem der vorangehenden Ansprüche, wobei die Länge der Aufenthaltskammer (5) verstellbar ist und/oder wobei der Mischer (1) Teil eines Bausatzes ist, der zumindest zwei auswechselbare Aufenthaltskammern (5) von unterschiedlicher Länge aufweist.

7. Vortex-Mischer (1) gemäß einem der vorangehenden Ansprüche, wobei der Auslass (3) ein Rohr aufweist, welches sich durch die Mischkammer (2) hindurch erstreckt und an oder nahe dem Übergang zwischen der Mischkammer (2) und der Aufenthaltskammer (5) oder innerhalb der Aufenthaltskammer (5) endet.

8. Verfahren zum Erhalten einer übersättigten Lösung oder Suspension von einem Reaktionsprodukt, wobei zumindest ein erster Flüssigstrom, der einen ersten Reaktanten enthält, und ein zweiter Flüssigstrom, welcher einen zweiten Reaktanten enthält, in einen Vortex-Mischer (1) eingeführt werden, welcher eine Mischkammer (2) mit einem axialen Auslass (3), zumindest einen Einlass (4), der zumindest im Wesentlichen tangential ist, sowie eine Aufenthaltskammer (5) aufweist, welche sich an der Seite von der Mischkammer (2), welche dem axialen Auslass (3) gegenüber liegt, axial erstreckt, unter Erzeugung eines äußeren Vortex/Wirbels (6) in einer Richtung weg von dem Auslass (3) des Mischers (1) sowie eines inneren Vortex/Wirbels (7) in einer Richtung zu dem Auslass (3), und wobei die Reaktanten reagieren, um die übersättigte Lösung zu formen.

9. Verfahren gemäß Anspruch 8, wobei der erste Strom eine Lösung von einer organischen Säure ist, z. B. ausgewählt aus Milchsäure, Glukonsäure und Zitronensäure, und/oder der zweite Strom eine Suspension von einer Base ist, z. B. ausgewählt aus Magnesium(hydr)oxid, Kalzium(hydr)oxid, Zink(hydr)oxid und Aluminium(hydr)oxid.

10. Verfahren gemäß Anspruch 9, wobei der Druck in dem Mischer zumindest 0,3 bar ist, bevorzugt in einem Bereich von 0,5 bar bis 10 bar.

11. Verfahren gemäß einem der Ansprüche 8-10, wobei die übersättigte Lösung einen Trockenfeststoffgehalt von mehr als 25 Gewichtsprozent hat, bevorzugt mehr als 30 Gewichtsprozent, bevorzugt in einem Bereich von 30 bis 80 Gewichtsprozent, bevorzugt in einem Bereich von 30 bis 50 Gewichtsprozent.

## Revendications

1. Mélangeur à tourbillon (1) doté d'une chambre de mélange (2) ayant une sortie axiale (3) et au moins une entrée (4) qui est au moins sensiblement tangentielle, **caractérisé par** une chambre de séjour fermée (5) s'étendant axialement sur le côté de la chambre de mélange (2) opposé à la sortie axiale (3).

2. Mélangeur à tourbillon (1) selon la revendication 1, dans lequel la chambre de séjour (5) est dimensionnée pour générer, durant le fonctionnement, un tourbillon extérieur (6) dans une direction opposée à la sortie (3) et un tourbillon intérieur (7) dans la direction de la sortie (3).

3. Mélangeur à tourbillon (1) selon la revendication 1 ou 2, dans lequel au moins la partie d'extrémité (5A) de la chambre de séjour (5) est conique.

4. Mélangeur à tourbillon (1) selon l'une quelconque des revendications précédentes, dans lequel la longueur interne (L) de la chambre de séjour (5) se trouve dans une plage de 10 cm à 2 m, de préférence dans une plage de 15 cm à 1 m, idéalement dans une plage de 20 cm à 70 cm, le diamètre interne (D) de la chambre de séjour se trouve dans une plage de 1 cm à 20 cm, de préférence dans une plage de 2 cm à 10 cm, et/ou le rapport longueur/diamètre (L/D) se trouve dans une plage de 0,5 à 50, de préférence dans une plage de 3 à 15.

5. Mélangeur à tourbillon (1) selon l'une quelconque des revendications précédentes, dans lequel au niveau de l'interface entre la chambre de mélange (2) et la chambre de séjour (5) les sections transversales des chambres (2, 5) sont au moins sensiblement identiques et alignées.

6. Mélangeur à tourbillon (1) selon l'une quelconque des revendications précédentes, dans lequel la longueur de la chambre de séjour (5) est ajustable et/ou dans lequel le mélangeur (1) fait partie d'un kit comprenant au moins deux chambres de séjour interchangeables (5) de différentes longueurs.

7. Mélangeur à tourbillon (1) selon l'une quelconque des revendications précédentes, dans lequel la sortie (3) comprend une conduite qui s'étend à travers la chambre de mélange (2) et se termine au niveau ou à proximité de la transition entre la chambre de mélange (2) et la chambre de séjour (5) ou à l'intérieur de la chambre de séjour (5).

8. Procédé d'obtention d'une solution ou bouillie sursaturée d'un produit de réaction, dans lequel au moins un premier flux de liquide contenant un premier réactif et un second flux de liquide contenant un second réactif sont introduits dans un mélangeur à tourbillon (1) doté d'une chambre de mélange (2) ayant une sortie axiale (3), au moins une entrée (4) qui est au moins sensiblement tangentielle, et une chambre de séjour (5) s'étendant axialement sur le côté de la chambre de mélange (2) opposé à la sortie axiale (3), générant un tourbillon extérieur (6) dans une direction à l'écart de la sortie (3) du mélangeur (1) et un tourbillon intérieur (7) dans la direction de la sortie (3), et dans lequel les réactifs réagissent pour former la solution sursaturée.

9. Procédé selon la revendication 8, dans lequel le premier flux est une solution d'un acide organique, par exemple, choisi parmi l'acide lactique, l'acide gluconique, et l'acide citrique, et/ou le second flux est une suspension d'une base, par exemple choisie parmi l'(hydr) oxyde de magnésium, l'(hydr) oxyde de calcium, l'(hydr) oxyde de zinc, et l'(hydr) oxyde d'aluminium.

10. Procédé selon la revendication 9, dans lequel la pression dans le mélangeur est d'au moins 0,3 bar, de préférence dans une plage de 0,5 bar à 10 bars.

11. Procédé selon l'une quelconque des revendications 8 à 10, dans lequel la solution sursaturée a une teneur en matières solides supérieure à 25 % en poids, de préférence supérieure à 30 % en poids, de préférence dans une plage de 30 à 80 % en poids, idéalement dans une plage de 30 à 50 % en poids.
